# EUROPEAN PATENT APPLICATION

(11) **EP 1 528 544 A2**
(43) Date of publication of application: **04.05.2005**
(21) Application number: 04019616.4
(22) Date of filing: 18.08.2004
(51) Int. Cl.: G11B 7/09

(54) **Optical disk apparatus**

(30) Priority: 28.10.2003 JP 2003367837
(71) Applicant: Kabushiki Kaisha Toshiba, Tokyo 105-8001 (JP)
(72) Inventor: Tanaka, Hiroaki, 1-1-1 Shibaura Minato-ku Tokyo 105-8001 (JP)
(74) Representative: Henkel, Feiler & Hänzel

(57) **Abstract**

An optical disk apparatus according to an aspect of this invention includes an optical processing unit (2) configured to detect reflected light from an optical disk, a signal generation unit (4) configured to generate a focus control signal and a tracking control signal on the basis of the reflected light detected by the optical processing unit, a correction unit (5) configured to correct the signals generated by the signal generation unit on the basis of a correction value adjusted in advance, and an adjustment unit (7,9) configured to readjust the correction value.
Signal processing following a change in the characteristics of the optical pickup or optical disk are thereby improved.

## Description

The present invention relates to an optical disk apparatus which reads out data recorded on an optical disk medium such as a CD or DVD.

An optical disk apparatus incorporates various servo circuits to achieve a stable read and write of data, as disclosed in Jpn. Pat. Appln. KOKAI Publication No. 6-243496. For example, a focus servo detects that a laser beam emitted from an optical pickup is going to be out of an ideal focal position and causes a focus actuator to operate to recover it so that the laser beam always focuses on the recording surface of an optical disk. A tracking servo is driven in the radial direction of the optical disk so that the laser beam always focuses on a track of the disk.

However, recent multifunctional optical pickups are difficult to obtain a stable operation characteristic. For example, an optimum correction method for an optical pickup changes if the temperature in the optical disk apparatus in disk insertion is different from that during the operation. Even the inserted optical disk itself can warp due to heat, and its physical characteristic is not always constant during the operation.

Conventional methods cannot follow the changing characteristic of an optical pickup or optical disk during use. Hence, the read and write performance gradually degrades during use.

It is an object of the present invention to provide an optical disk apparatus capable of executing signal processing following a change in characteristic of an optical pickup or optical disk.

According to an aspect of the present invention, there is provided an optical disk apparatus comprising a rotational driving unit configured to rotationally drive an optical disk, an optical processing unit configured to irradiate the optical disk with a light beam and detect reflected light from the optical disk, an optical driving unit configured to drive the optical processing unit, a signal generation unit configured to generate a focus control signal which controls focus of the light beam, a tracking control signal which controls tracking of the light beam, and a data signal corresponding to data on the optical disk on the basis of the reflected light detected by the optical processing unit, a correction unit configured to correct the signals generated by the signal generation unit on the basis of a correction value adjusted in advance, a control unit configured to control focus and tracking on the basis of the focus control signal and the tracking control signal corrected by the correction unit, and an adjustment unit configured to readjust the correction value at a predetermined timing.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing the schematic arrangement of an optical disk drive (optical disk apparatus) according to an embodiment of the present invention;
FIG. 2 is a graph showing a signal having an actual shift so as to explain a shift amount from an ideal focal point;
FIG. 3 is a graph showing a signal whose shift is corrected so as to explain a shift amount from an ideal focal point;
FIG. 4 is a flowchart showing processing in disk insertion according to the first embodiment;
FIG. 5 is a flowchart showing readjustment processing according to the first embodiment;
FIG. 6 is a flowchart showing processing in disk insertion according to the second embodiment;
FIG. 7 is a flowchart showing readjustment processing according to the second embodiment;
FIG. 8 is a flowchart showing processing in disk insertion and readjustment processing according to the third embodiment;
FIG. 9 is a flowchart showing processing in disk insertion and readjustment processing according to the fourth embodiment;
FIG. 10 is a flowchart showing processing in disk insertion according to the fifth embodiment;
FIG. 11 is a view showing an example of a position/correction value correspondence table generated in the fifth embodiment;
FIG. 12 is a flowchart showing readjustment processing according to the fifth embodiment;
FIG. 13 is a flowchart for explaining RF signal amplitude adjustment; and
FIG. 14 is a flowchart for explaining focus offset adjustment.

Embodiments of the present invention will be described below with reference to the accompanying drawing.

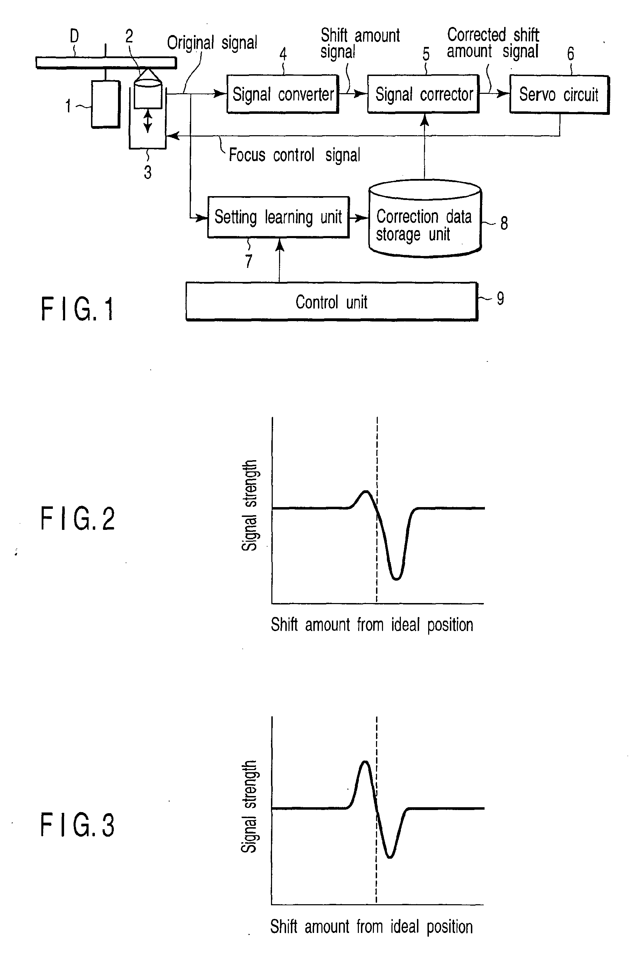

FIG. 1 is a view showing the schematic arrangement of an optical disk drive (optical disk apparatus) according to an embodiment of the present invention. This optical disk drive dynamically readjusts set values during operations such as read and write. As shown in FIG. 1, the optical disk drive comprises a spindle motor 1, optical pickup 2, focus actuator 3, signal converter 4, signal corrector 5, servo circuit 6, setting learning unit 7, correction data storage unit 8, and control unit 9.

The spindle motor 1 rotationally drives an optical disk D. The optical pickup 2 irradiates the optical disk D with a light beam and detects reflected light from the optical disk D. The focus actuator 3 moves the optical pickup 2 in a direction normal to the optical disk D.

The servo circuit 6 functions to achieve a stable data read/write. For example, the focus servo in the servo circuit 6 detects that a laser beam emitted from the optical pickup is going to be out of an ideal focal position and causes the focus actuator to operate to recover it so that the laser beam always focuses on the recording surface of the optical disk D. The tracking servo in the servo circuit 6 is driven in the radial direction of the optical disk D so that the laser beam always focuses on a track of the disk.

An original signal obtained from the reflected light detected by the optical pickup 2 is sent to the signal converter 4. The signal converter 4 generates a shift amount signal by converting the shift amount of the optical pickup 2 from the ideal focal point into a signal strength. The strength of the shift amount signal changes depending on the direction of the shift from the ideal position, i.e., positive direction or negative direction, as shown in FIG. 2. The shift amount signal also has the amplitude quality problem that the signal may exceed its maximum amplitude or have only an insufficient amplitude.

The shift amount signal generated by the signal converter 4 is sent to the signal corrector 5. The signal corrector 5 increases/decreases the amplitude of the shift amount signal to an appropriate value, equalizes the shift amount of the signal strength in the positive and negative directions, and adjusts the entire amplitude to an appropriate value, thereby generating a corrected shift amount signal. The corrected shift amount signal is generated on the basis of, e.g., fluctuation (left and right balance) of jitter of the RF signal. Alternatively, the corrected shift amount signal is generated by gain adjustment for reflected light detection signals obtained from a plurality of photodetection areas of a photodetector. The center of the shift amount signal can be detected from the maximum value (just focus point) of the RF signal. The defocus margin is 0.5 *µ* m. The shift amount signal which is influenced by temperature is corrected in accordance with a change in temperature (e.g., 20°C to 30°C).

The corrected shift amount signal generated by the signal corrector 5 is sent to the servo circuit 6. As shown in FIG. 3, the signal strengths of the corrected shift amount signal almost equal in the directions of the shift from the ideal position of the optical pickup. In addition, the maximum amplitude of the signal is also appropriate and falls within the range of 80% to 90% of the maximum amplitude. The servo circuit 6 executes a negative feedback operation from the corrected shift amount signal to the shift amount of the signal, thereby generating a focus control signal.

The focus control signal generated by the servo circuit 6 is sent to the focus actuator 3. The focus actuator 3 moves the optical pickup 2 vertically in accordance with the focus control signal. As a result, the optical pickup 2 heads for the focal position.

The signal corrector 5 executes correction by amplifying or attenuating the signal on the basis of signal amplification/attenuation data stored in the correction data storage unit 8 in advance. The signal amplification/attenuation data is obtained by adjustment in the optical disk drive manufacturing process to absorb characteristic variations of the optical pickup 2. In addition, to absorb characteristic variations of each optical disk D inserted at the time of disk insertion, the setting learning unit 7 changes the characteristic of the signal corrector 5 on the basis of the signal amplification/attenuation data stored in advance, checks the change of the original signal obtained from the optical pickup 2, and stores an optimum characteristic of the signal corrector 5 in the correction data storage unit 8 as new signal amplification/attenuation data.

The first to fifth embodiments of readjustment processing by the control unit 9 of the optical disk drive shown in FIG. 1 will be described below.

The first embodiment will be described first. The control unit 9 has a function of detecting the operation state of each unit in the optical disk drive or giving operation specifications to the units and designates the operation timing of the setting learning unit 7.

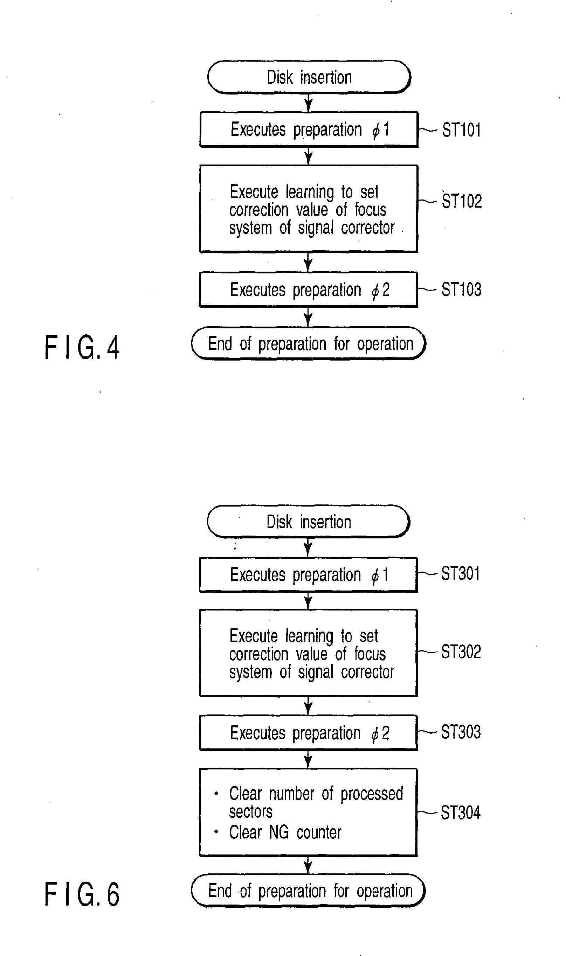

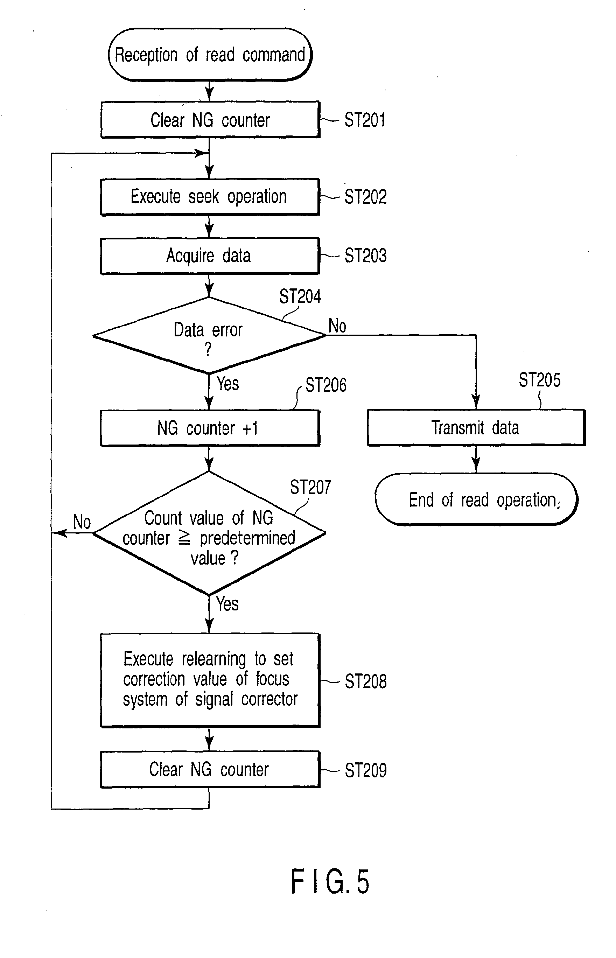

FIGS. 4 and 5 are flowcharts showing various kinds of control by the control unit 9. More specifically, FIG. 4 is a flowchart showing processing for learning the characteristic of the signal corrector 5 of the focus servo in disk insertion. FIG. 5 is a flowchart showing readjustment processing on condition that no data can be read out from the disk.

As shown in FIG. 4, when a disk is inserted, preparation steps (ST101 and ST103) are executed such that data can be read out from and written on the disk. Between the,preparation steps, the control unit 9 instructs the setting learning unit 7 to start learning. In response to this, the setting learning unit 7 learns an optimum characteristic of the focus system of the signal corrector 5 (ST102). Signal amplification/attenuation data obtained by learning is stored in the correction data storage unit 8.

The control unit 9 manages the count value by an NG counter. As shown in FIG. 5, upon receiving a read command, the control unit 9 clears the NG counter (ST201) and executes a seek operation (ST202). Next to the seek operation, data to be read out is read out from the target address position (ST203). The data to be read out is read through the optical pickup 2. The control unit 9 determines whether the readout data is an error (ST204). If the readout data is no error (YES in step ST204), the data is transmitted (ST205), and the read operation is ended.

If the readout data is an error (NO in step ST204), the control unit 9 increments the NG counter (ST206). The control unit 9 refers to the NG counter. If the value is smaller than a predetermined value (NO in step ST207), the seek operation is repeated (ST202). If the NG counter is equal to or larger than the predetermined value (YES in step ST207), the setting of the focus system of the signal corrector 5 is relearned (ST208). More specifically, the control unit 9 activates the setting learning unit 7. After that, the control unit 9 clears the NG counter (ST209) and returns to the seek operation (ST202).

As described above, in the first embodiment, when the data read cannot be executed even after a predetermined number of times of retry, the characteristic of the focus servo of the signal corrector 5 is relearned and corrected to the optimum value at that time. Accordingly, the read after relearning can successfully be executed.

The second embodiment will be described next. As in the first embodiment, a control unit 9 has a function of detecting the operation state of each unit in the optical disk drive or giving operation specifications to the units and designates the operation timing of a setting learning unit 7.

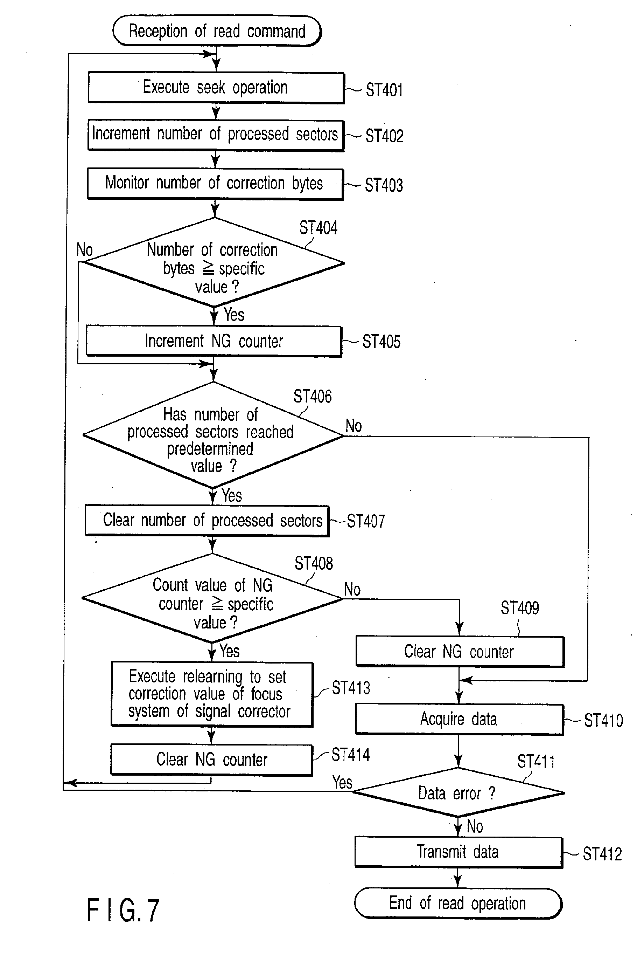

As shown in FIG. 6, when a disk is inserted, preparation steps (ST301 and ST303) are executed such that data can be read out from and written on the disk. Between the preparation steps, the control unit 9 instructs the setting learning unit 7 to start learning. In response to this, the setting learning unit 7 learns the optimum characteristic of the focus system of a signal corrector 5 (ST302). Signal amplification/attenuation data obtained by learning is stored in a correction data storage unit 8. After the preparation steps, the control unit 9 clears the processed sector count (to be described later) and two variables of an NG counter (ST304).

As shown in FIG. 7, upon receiving a read command, the control unit 9 executes a seek operation (ST401) to move an optical pickup 2 to a readable position of the target sector. After the end of the seek operation, the control unit 9 counts the number of data every time the data in the target sector is received (ST402), and monitors the number of correction bytes (ST403). The number of correction bytes is an effective index in the read of CD media. In a read of DVD media, the number of correction lines is used instead.

The control unit 9 checks whether the number of correction bytes is equal to or larger than a specific value (ST404). If the number of correction bytes is equal to or larger than the specific value (YES in step SST404), the control unit 9 clears the NG counter (ST405). If the number of correction bytes is smaller than the specific value (NO in step ST404), the NG counter need not be incremented.

The control unit 9 also checks the number of processed sectors (ST406). If the number of processed sectors has not reached a predetermined value (NO in step ST406), data is acquired (ST410). If the number of processed sectors has reached the predetermined value (YES in step ST406), the number of processed sectors is cleared to prepare for the next check (ST407).

In addition, the control unit 9 checks whether the value of the NG counter is equal to or larger than a specific value (ST408). If the value of the NG counter is smaller than the specific value (NO in step ST408), the data read quality from the optical disk is not poor. The NG counter is cleared to prepare for the next check (ST409), and data is acquired (ST410). After the data is acquired, the control unit 9 checks whether the acquired data contains an error (ST411). If the acquired data contains an error (YES in step ST411), the processing is repeated from the seek operation (ST401). If the acquired data contains no error (NO in step ST411), i.e., if the data is normal, the data is transmitted (ST412), and the read operation is ended.

On the other hand, if it is determined by checking the value of the NG counter that it is equal to or larger than the specific value (YES in step ST408), the data read quality from the optical disk is poor. In this case, the control unit 9 instructs the setting learning unit 7 to relearn the setting of the focus system of the signal corrector 5 (ST413). After that, the control unit 9 clears the NG counter to prepare for the next measurement (ST414) and returns to the seek operation (ST401).

As described above, in the second embodiment, a sign indicating that readout data should become uncorrectable is detected in advance, and the setting of the focus system of the signal corrector 5 is relearned. Accordingly, the same stable read and write performance as in the first embodiment can be obtained while preventing any data unreadable state.

The third embodiment will be described next. As in the first embodiment, a control unit 9 has a function of detecting the operation state of each unit in the optical disk drive or giving operation specifications to the units and designates the operation timing of a setting learning unit 7.

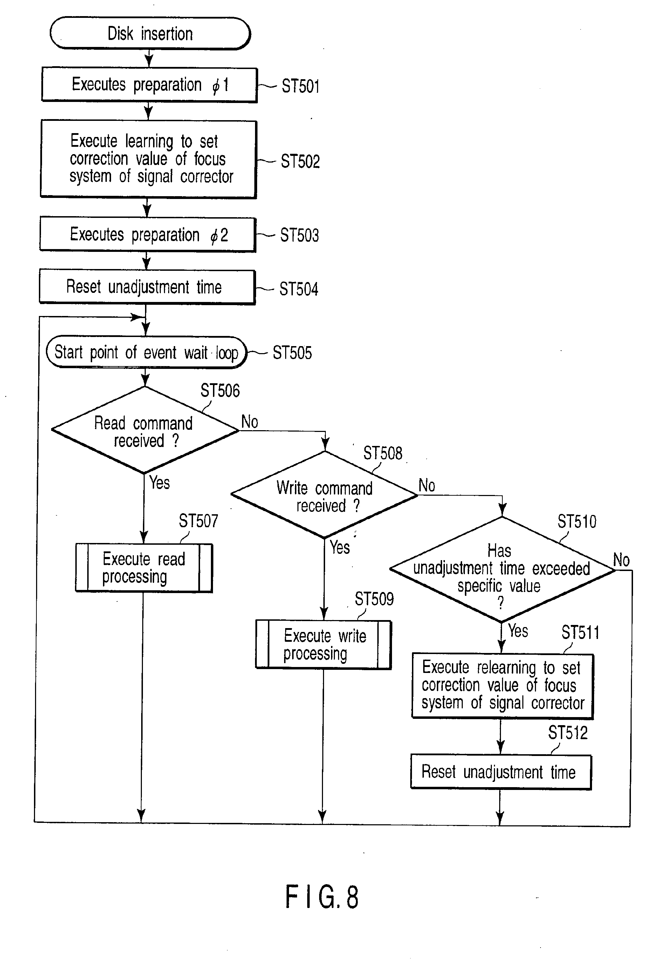

As shown in FIG. 8, when a disk is inserted, preparation steps (ST501 and ST503) are executed such that data can be read out from and written on the disk. Between the preparation steps, the control unit 9 instructs the setting learning unit 7 to start learning. In response to this, the setting learning unit 7 learns an optimum characteristic of the focus system of a signal corrector 5 (ST502). Signal amplification/attenuation data obtained by learning is stored in a correction data storage unit 8. After the preparation steps, the control unit 9 resets the unadjustment time as an internal variable (ST504). This is a timer variable that measures the time that has elapsed from the reset time. The optical disk drive is set in a state wherein it can receive a read or write command. The control unit 9 starts an event wait loop (ST505).

In the event wait loop, when a read command is received (YES in step ST506), read processing is executed (ST507). When a write command is received (YES in step ST508), write processing is executed (ST509). In the event wait loop, the control unit 9 monitors whether the unadjustment time exceeds a specific value (ST510). If the unadjustment time exceeds the specific value (YES in step ST510), the setting of the focus system of the signal corrector 5 is relearned (ST511), and the unadjustment time is reset to prepare for the next learning (ST512).

As described above, in the third embodiment, the setting of the focus system of the signal corrector 5 is relearned especially by using the read/write command nonreception time, i.e., idle time. Hence, the optical disk drive can always keep the focus system of the signal corrector 5 in an optimum state without impeding read or write command processing. On the other hand, if read or write commands are continuously received, the settling of the focus system of the signal corrector 5 cannot be relearned. As a consequence, the read or write commands may continuously be processed at a shifted optimum point. To prevent this, the third embodiment is preferably implemented in combination with the first or second embodiment.

The fourth embodiment will be described next. As in the first embodiment, a control unit 9 has a function of detecting the operation state of each unit in the optical disk drive or giving operation specifications to the units and designates the operation timing of a setting learning unit 7.

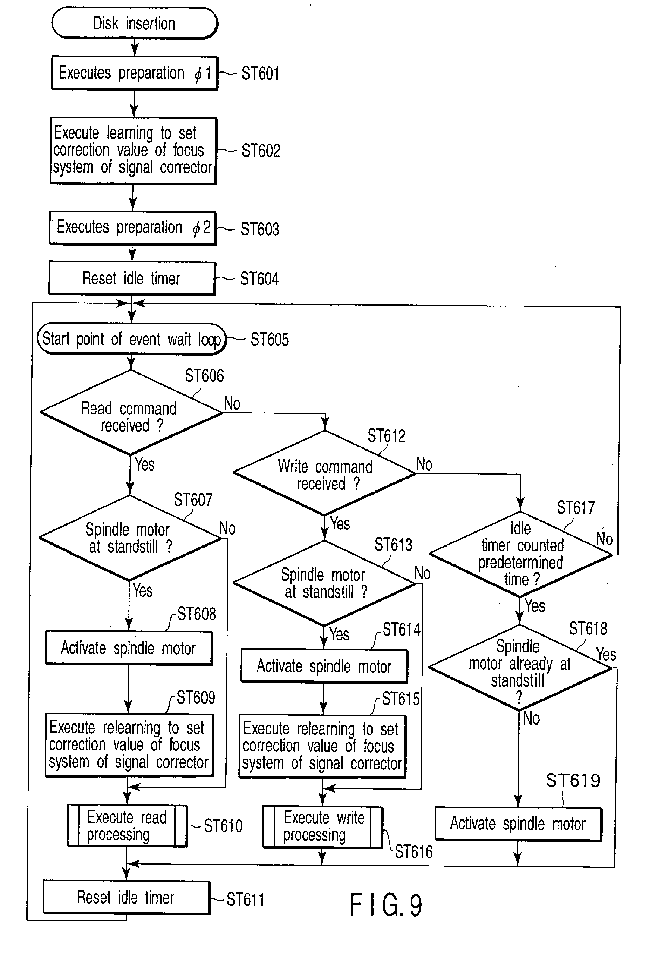

As shown in FIG. 9, when a disk is inserted, preparation steps (ST601 and ST603) are executed such that data can be read out from and written on the disk. Between the preparation steps, the control unit 9 instructs the setting learning unit 7 to start learning. In response to this, the setting learning unit 7 learns an optimum characteristic of the focus system of a signal corrector 5 (ST602). Signal amplification/attenuation data obtained by learning is stored in a correction data storage unit 8. After the preparation steps, the control unit 9 resets an idle timer which is managed by the control unit 9 (ST604).

After this, the optical disk drive is set in a state wherein it can receive a read or write command. The control unit 9 starts an event wait loop (ST605).

In the event wait loop, the control unit 9 waits for a command from the host computer. Upon receiving a read command (YES in step ST606), the control unit 9 checks whether a spindle motor 1 is at a standstill (ST607). If it is determined that the spindle motor 1 is at a standstill (YES in step ST607), the spindle motor 1 is activated (ST608). After that, the control unit 9 instructs the setting learning unit 7 to relearn the setting of the focus system of the signal corrector 5 (ST609). After that, read processing is executed (ST610). In the read processing, an optical pickup 2 seeks the target position, and data is acquired from the optical disk. If the acquired data is an error, seek is executed again. If normal data is acquired by seek, the normal data is transmitted to the host. After the read processing, the control unit 9 resets the idle timer (ST611) and returns to the event wait loop to prepare for the next event (ST605).

Upon receiving a write command (YES in step ST612), the control unit 9 checks whether the spindle motor 1 is at a standstill (ST613). If it is determined that the spindle motor 1 is at a standstill (YES in step ST613), the spindle motor 1 is activated (ST614). After that, the control unit 9 instructs the setting learning unit 7 to relearn the setting of the focus system of the signal corrector 5 (ST615). After that, write processing is executed (ST616). In the write processing, write data from the host computer is received, OPC learning is executed as needed, the optical pickup 2 is moved to the target write position, and the optical pickup 2 writes the data on the optical disk. After the write processing, the control unit 9 resets the idle timer (ST611) and returns to the event wait loop to prepare for the next event (ST605).

In the event wait loop, upon detecting that the count time by the idle timer has reached a predetermined time (YES in step ST617), the control unit 9 stops the spindle motor 1 (ST619). If the spindle motor 1 is already at a standstill (YES in step ST618), the spindle motor is not stopped again. In either case, the control unit 9 resets the idle timer (ST611) and returns to the event wait loop (ST605).

As a characteristic feature of the fourth embodiment, when the count time by the idle timer has reached a predetermined time, the spindle motor 1 is stopped. If a read or write is to be executed since then, the spindle motor 1 is activated. Subsequently, the setting of the focus system of the signal corrector 5 is relearned.

As described above, in the fourth embodiment, the control unit 9 executes relearning of the setting of the focus system of the signal corrector 5 at the activation timing of the spindle motor 1. Generally, in an optical disk drive connected to a host computer, the spindle motor 1 is often continuously be at a standstill for a long time. During that time, the temperature can largely change. According to the fourth embodiment, even in this case, the settling of the focus system of the signal corrector 5 can be kept in an optimum state.

The fifth embodiment will be described next. As in the first embodiment, a control unit 9 has a function of detecting the operation state of each unit in the optical disk drive or giving operation specifications to the units and designates the operation timing of a setting learning unit 7.

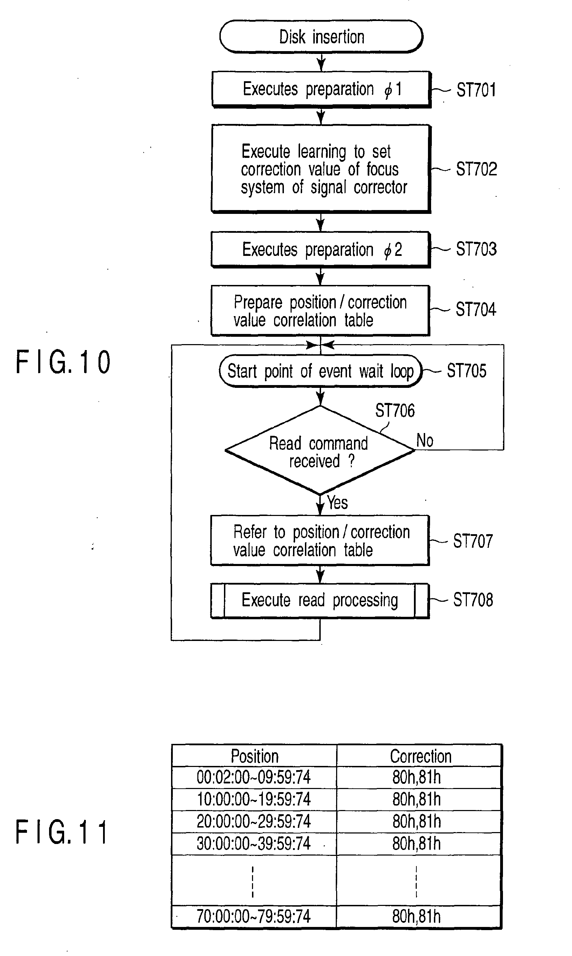

As shown in FIG. 10, when a disk is inserted, preparation steps (ST701 and ST703) are executed such that data can be read out from and written on the disk. Between the preparation steps, the control unit 9 instructs the setting learning unit 7 to start learning. In response to this, the setting learning unit 7 learns an optimum characteristic of the focus system of a signal corrector 5 (ST702). Signal amplification/attenuation data obtained by learning is stored in a correction data storage unit 8. After the preparation steps, the control unit 9 prepares a position/correction value correspondence table (ST704). Actually, the position/correction value correspondence table is prepared (stored) in the correction data storage unit 8.

FIG. 11 is a view showing an example of the position/correction value correspondence table. Positions in the position/correction value correspondence table are defined by dividing the sector addresses in the disk into appropriate areas and permanently given to the disk. Correction values in the position/correction value correspondence table are obtained by the learning step (ST702). That is, in the learning step (ST702), the position/correction value correspondence table is generated on the basis of the correction values obtained from the respective positions (ST704).

When the position/correction value correspondence table is generated (ST704), the control unit 9 starts an event wait loop (ST705). Upon receiving a read command in the event wait loop (YES in step ST706), the control unit 9 refers to the position/correction value correspondence table (ST707), obtains a correction value corresponding to the read target address from the position/correction value correspondence table, and executes read processing (ST708).

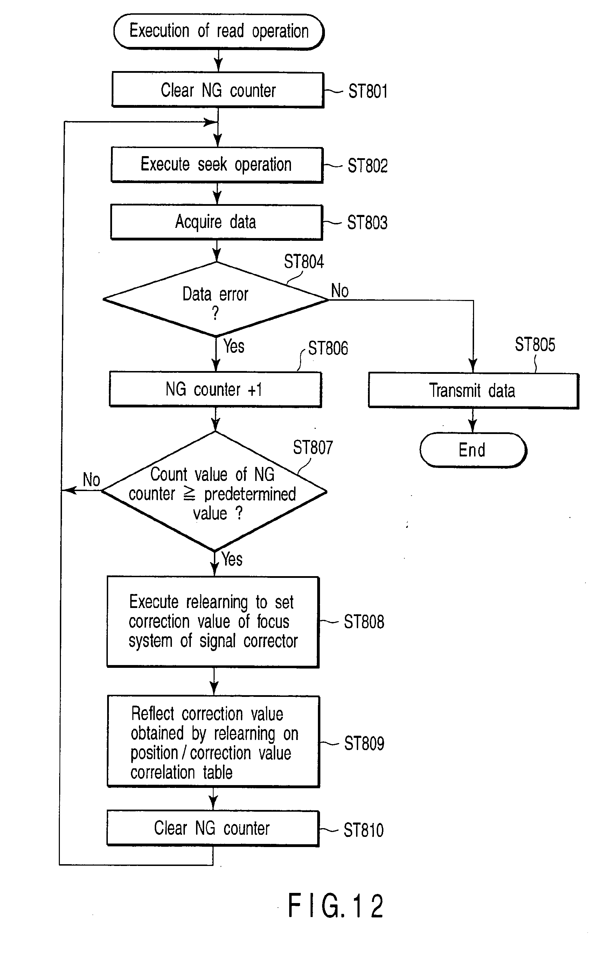

FIG. 12 is a flowchart showing read processing (ST708). As shown in FIG. 12, upon receiving a read command, the control unit 9 first clears an NG counter (ST801) and executes a seek operation (ST802). Next to the seek operation, data to be read out is read out from the target address position (ST803). The data to be read out is read through an optical pickup 2. The control unit 9 determines whether the readout data is an error (ST804). If the readout data is no error (YES in step ST804), the data is transmitted (ST805), and the read operation is ended.

If the readout data is an error (NO in step ST804), the control unit 9 increments the NG counter (ST806). The control unit 9 refers to the NG counter. If the value is smaller than a predetermined value (NO in step ST807), the seek operation is repeated (ST802). If the NG counter is equal to or larger than the predetermined value (YES in step ST807), the setting of the focus system of the signal corrector 5 is relearned (ST808). More specifically, the control unit 9 activates the setting learning unit 7. By this relearning, a position/correction value correspondence table is generated on the basis of correction values obtained from the respective positions and stored in the correction data storage unit 8 (ST809). After that, the control unit 9 clears the NG counter (ST810) and returns to the seek operation (ST802).

As described above, in the fifth embodiment, a satisfactory correction value can be given to, e.g., a largely warped disk for which the optimum set value of the focus system of the signal corrector 5 changes for each position on the disk. Hence, satisfactory read performance can always be obtained on the entire surface of the disk.

The above-described first to fifth embodiments will be summarized. As described above, in the first to fifth embodiments, the servo system set value is readjusted by a predetermined trigger (at a predetermined timing).

In the first embodiment, occurrence of an error in read data is used as a trigger. That is, it is determined whether read data is normal. The servo system set value is readjusted on the basis of the determination result.

In the second embodiment, the number of correction bytes of read data is used as a trigger. That is, it is determined whether the number of correction bytes or the number of correction lines in acquiring read data is equal to or larger than a specific value. The servo system set value is readjusted on the basis of the determination result.

In the third embodiment, an idle state is used as a trigger. That is, it is determined whether neither a read command nor a write command are generated and whether a predetermined time has elapsed from the preceding readjustment. The servo system set value is readjusted on the basis of the determination results.

In the fourth embodiment, return from a standby state is used as a trigger. That is, when the spindle motor which has been at a standstill is reactivated, or the spindle motor is reactivated for the purpose of a read or write, the servo system set value is readjusted.

In the fifth embodiment, a disk radial position is used as a trigger. That is, when data is to be read out for a predetermined radial position on a disk, the position/correction value correspondence table is referred to, and the servo system set value is readjusted on the basis of a correction value corresponding to the radial position. In addition, the position/correction value correspondence table is updated to latest information as needed.

In the above description, the object to be adjusted is a correction value set for the servo system in advance and, more particularly, a correction value of the focus system. However, the present invention is not limited to this. For example, a correction value set for the tracking system may be adjusted. A correction value set in advance to adjust the amplitude of an RF signal as a data signal may be adjusted. Alternatively, an adjustment value such as an offset given to the actuator or the like in advance may be adjusted. Various values as described above can be readjusted by the above-described trigger (at a predetermined timing).

In the present invention, learning of the focus servo characteristic, tracking servo characteristic, RF signal characteristic, and actuator offset adjustment value is appropriately executed for a physical device whose characteristics change during the operation, thereby achieving optimum signal correction. Accordingly, stable read and write performance can be implemented throughout the operation period.

For example, assume that the disk largely warps, and the focus point on its surface can hardly be maintained only by focus servo. In this case, the position of the optical pickup is mechanically corrected in the focus direction, or an electrical offset is added to the focus actuator to help focusing of the focus servo. When the present invention is combined with the correction amount learning function, it is possible to cope with even a change-over-time in warping of the inserted disk.

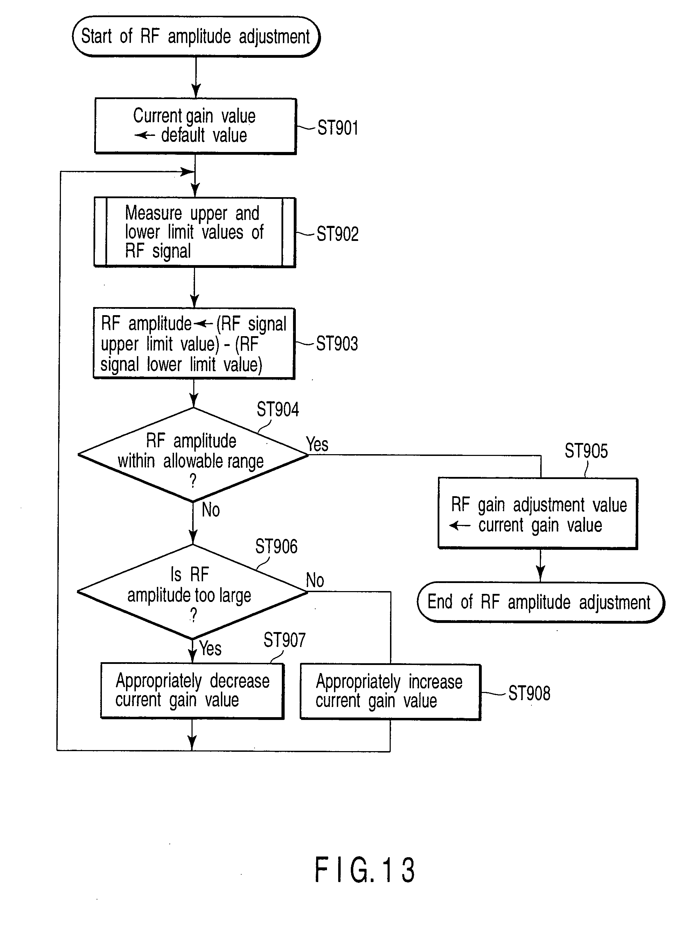

RF signal amplitude adjustment will be described with reference to FIG. 13. When RF signal amplitude adjustment is started, an appropriate RF signal amplifier gain value is given as a current gain value to the signal corrector 5 which functions as an RF amplifier (ST901). When the appropriate RF signal amplifier gain value is given, the RF signal is expected to have a measurable amplitude.

The upper and lower limit values of the RF signal are obtained on the basis of the current gain value (ST902). An RF signal is obtained by converting reflected light of a laser beam from a track in a tracking state into an electrical signal, integrating the magnitude of the signal, and removing the DC component through an LPF. Since the DC component is removed, the RF signal exhibits complex movement while uniformly varying from 0 [V] in the vertical direction. This is measured for a predetermined period. The maximum and minimum values are obtained as the upper and lower limit values of the RF signal.

Subsequently, the RF amplitude is obtained. The RF amplitude can be obtained by RF signal upper limit value - RF signal lower limit value (ST903). Next, it is checked whether the obtained RF amplitude falls within the allowable range (ST904). If the RF amplitude falls within the allowable range (YES in step ST904), the current gain value is employed as the RF gain adjustment value, and the processing is ended (ST905). If the RF amplitude falls outside the allowable range (NO in step ST904), it is checked whether the RF amplitude is too large (ST906). If the RF amplitude is too large (YES in step ST906), the gain of the RF signal amplifier, i.e., the current gain value is appropriately decreased (ST907). If the RF amplitude is too small (NO in step ST906), the gain of the RF signal amplifier, i.e., the current gain value is appropriately increased (ST908).

Various methods can be used to select new values in these steps. For example, the value may be increased or decreased by a fixed amount. Alternatively, convergence may be accelerated by using the substantial proportional relationship between the amplifier gain value and the RF amplitude value. In either case, the upper and lower limit values of the RF amplitude are measured again (ST902).

The RF gain adjustment value set in the above-described way is readjusted by the above-described trigger (at a predetermined timing). Accordingly, stable read performance can be implemented.

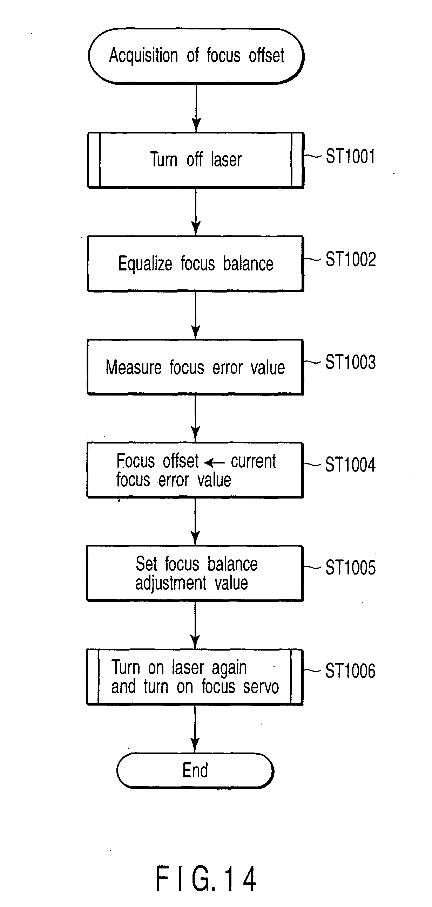

Focus offset adjustment will be described next with reference to FIG. 14. A focus offset means the DC component of a focus error signal. The servo circuit 6 can execute servo control only after removing the DC current of the focus error signal. To obtain a focus offset, first, the laser is turned off (ST1001). Accordingly, incident light on the photodetection element is almost zero.

Subsequently, the focus balance adjustment value is invalidated to equalize the focus balance in the positive and negative directions (ST1002). Then, the focus error value is measured (ST1003). When the laser is turned off (ST1001), and the focus balance is equalized (ST1002), the focus error value measured at this time coincides with the DC component of the focus error signal. The measured value is recorded as the focus offset (ST1004).

Subsequently, a preparation for the start of focus servo is made. First, the focus balance adjustment value is restored (ST1005). The laser is turned on again, and the focus servo is turned on (ST1006). At this time, the focus offset obtained in step ST1004 is subtracted from the focus error signal.

A tracking offset can also be acquired by the same method as described above.

The focus balance adjustment value set in the above-described way is readjusted by the above-described trigger (at a predetermined timing). Accordingly, stable read performance can be implemented.

In the above description, the preset correction values or adjustment values are readjusted in both the read step of reading data from the optical disk and the write step of writing data on the disk. In addition to these cases, for example, the preset correction values or adjustment values may be readjusted only in the read step.

According to the above-described present invention, an optical disk apparatus capable of, e.g., executing signal processing following a change in characteristic of an optical pickup or optical disk can be provided.

## Claims

1. An optical disk apparatus **characterized by** comprising:
a rotational driving unit (1) configured to rotationally drive an optical disk;
an optical processing unit (2) configured to irradiate the optical disk with a light beam and detect reflected light from the optical disk;
an optical driving unit (3) configured to drive the optical processing unit;
a signal generation unit (4) configured to generate a focus control signal which controls focus of the light beam, a tracking control signal which controls tracking of the light beam, and a data signal corresponding to data on the optical disk on the basis of the reflected light detected by the optical processing unit;
a correction unit (5) configured to correct the signals generated by the signal generation unit on the basis of a correction value adjusted in advance;
a control unit (6) configured to control focus and tracking on the basis of the focus control signal and the tracking control signal corrected by the correction unit; and
an adjustment unit (7, 9) configured to readjust the correction value at a predetermined timing.

2. An apparatus according to claim 1, **characterized in that** the adjustment unit readjusts the correction value at the predetermined timing in a data read from the optical disk by the optical unit.

3. An apparatus according to claim 1, **characterized in that** the adjustment unit learns a characteristic of the optical disk and readjusts the correction value to correct the focus control signal and the tracking control signal.

4. An apparatus according to claim 1, **characterized in that** the adjustment unit learns a characteristic of the optical disk and readjusts the correction value to correct the data signal.

5. An apparatus according to claim 1, **characterized in that** the adjustment unit learns a characteristic of the optical disk and readjusts an offset adjustment value set for the optical driving unit in advance.

6. An apparatus according to claim 1, **characterized in that** the adjustment unit executes readjustment on the basis of reliability of read data generated from the data signal.

7. An apparatus according to claim 1, **characterized in that** the adjustment unit executes readjustment on the basis of an error occurrence frequency in read data generated from the data signal.

8. An apparatus according to claim 1, **characterized in that** the adjustment unit executes readjustment on the basis of a time elapsed from preceding readjustment.

9. An apparatus according to claim 1, **characterized in that** the adjustment unit executes readjustment on the basis of reactivation of the rotational driving unit.

10. An apparatus according to claim 1, **characterized in that** the adjustment unit learns a characteristic at each of a plurality of radial positions on the optical disk, calculates a correction value corresponding to each of said plurality of radial positions on the optical disk, generates a correction table which indicates a correspondence between the correction values and said plurality of radial positions on the optical disk, and in irradiating a predetermined radial position on the optical disk with the light beam, employs a correction value corresponding to the predetermined radial position.

11. An apparatus according to claim 10, **characterized in that** in irradiating the predetermined radial position on the optical disk with the light beam, the adjustment unit learns the characteristic at the predetermined radial position again, calculates the correction value corresponding to the predetermined radial position, and updates the correction table.
